Europäisches Patentamt

European Patent Office

Office européen des brevets

(11) Numéro de publication: **0 136 192**
**A1**

## (12) DEMANDE DE BREVET EUROPEEN

(21) Numéro de dépôt: **84401322.7**

(51) Int. Cl.⁴: **A 23 L 2/38**, A 23 F 5/24

(22) Date de dépôt: **22.06.84**

(30) Priorité: **22.06.83 FR 8310335**

(43) Date de publication de la demande: **03.04.85**
**Bulletin 85/14**

(84) Etats contractants désignés: **AT BE CH DE GB IT LI LU NL SE**

(71) Demandeur: **Chomel, Siméon, 23 avenue Marceau, F-75116 Paris (FR)**
Demandeur: **Chan Traine, Yvonne épouse Chomel, 23 avenue Marceau, F-75116 Paris (FR)**

(72) Inventeur: **Chomel, Siméon, 23 avenue Marceau, F-75116 Paris (FR)**
Inventeur: **Chan Traine, Yvonne épouse Chomel, 23 avenue Marceau, F-75116 Paris (FR)**

(54) **Boisson gazeuse du type "soda" et son procédé de fabrication.**

(57) Boisson non alcoolisée du type «Soda» constituée d'extraits de plantes, additionnée de sucre, d'acide citrique et d'eau gazéifiée.

Boisson caractérisée en ce que les extraits de plantes sont composés d'un mélange de plantes amères et de plantes sucrées dont la composition pour un litre de soda est la suivante:

Mélange sucré fait de cassonnade ou de sucre blanc à raison de 30 à 45 grammes par litre de soda.

Café de six à neuf grammes,
Vanille de trois à cinq grammes,
Kola de un à deux grammes,
Muscade de deux à trois grammes,
Gentiane de un gramme cinq à deux grammes cinq,
Cannelle de trois à cinq grammes,
Citron de deux à cinq grammes,
Extraits de fruits de deux à trois grammes.

Ces plantes constitueront un concentré qui sera ajouté au mélange sucré.

Procédé de préparation de la boisson, caractérisé en ce que les extraits sont mélangés en alternant les extraits de plantes sucrées et les extraits de plantes amères.

Procédé de préparation caractérisé en ce que le café est mélangé, préalablement à la cassonnade ou à la solution sucrée et en ce que le concentré d'extraits de plantes est ajouté au mélange cassonnade - café.

## DESCRIPTION

L'invention concerne une boisson non alcoolisée du type "Soda" composée d'extraits de plantes, de sucre, d'acide citrique et d'eau gazéifiée et son procédé de fabrication.

Elle est caractérisée en ce qu'elle est composée d'un mélange d'extraits de plantes amères et de plantes sucrées, ayant de l'arôme et du goût qui n'ont, jusqu'à présent, jamais été utilisées dans un soda.

Ces boissons dites "Soda" ne contiennent généralement que peu de produits, parfois un seul, tel que menthe, citron, orange, pamplemousse et s'apparentent au jus de fruits fortement aqueux. D'autres boissons contiennent au plus deux ou trois composants, mais sont surtout, fortement sucrées.

L'objet de l'invention est de proposer un mélange de plusieurs composants en vue de la confection d'un soda constituant une boisson désaltérante et agréable de goût, ayant des vertus tonifiantes, notamment toni-musculaire et tonicardiaque, tout en étant une boisson que l'on pourra boire couramment sans aucune gêne, ni danger pour l'organisme. Elle sera d'une innocuité totale. Elle apportera tous les bienfaits que procurent certaines plantes exotiques.

L'invention concerne une boisson non alcoolisée du type "Soda", constituée d'extraits de plantes et additionnée de sucre.

Les éléments de sucrage pourront être du sucre blanc de betteraves, du sucre blanc de canne à sucre, du sirop de sucre de canne, du sirop de sucre blanc de betteraves, de la cassonnade, provenant, soit du sucre de betteraves, raffiné une seule fois, soit du sucre de canne, également raffiné une seule fois.

Le mélange sucré sera composé d'un de ces produits, et de préférence constitué : pour un litre de soda, de 30 à 45 grammmes de cassonnade, diluée dans une quantité d'eau représentant deux fois et demie son poids.

Le sucrage doit être bien mélangé sinon il faudra le filtrer s'il est trouble.

Cette boisson sera caractérisée, en ce qui concerne les extraits de plantes destinés à la fabrication d'un concentré, par la composition des extraits de plantes suivantes pour un litre de soda :

Café de six à neuf grammes,
Vanille de trois à cinq grammes,
Kola de un à deux grammes,
Muscade de deux à trois grammes,
Gentiane de un gramme cinq à deux grammes cinq,
Cannelle de trois à cinq grammes,
Citron de deux à cinq grammes,
Extraits de fruits de deux à trois grammes.

Selon un mode de réalisation, les extraits de fruits seront constitués d'extraits d'orange.

Selon un autre mode de réalisation, les extraits de fruits pourront être constitués d'un mélange de fruits à base d'abricots, de fraises, framboises, mûres, groseilles.

Le mélange d'extraits de plantes pourra comporter en outre isolement ou en combinaison du Chasmanthère, à raison de un à deux grammes, du Gienseng à raison de un à deux grammes ainsi que de l'Eleutherokokk à raison de un à deux grammes.

L'invention concerne également le procédé de préparation de la boisson décrite précédemment, procédé caractérisé en ce que les extraits sont mélangés en alternant extraits de plantes sucrées et extraits de plantes amères pour obtenir une composition très homogène.

Préalablement le café aura été mélangé à la cassonnade ou au mélange sucré.

Enfin le concentré d'extraits de plantes est ajouté au mélange : cassonnade - café.

Il pourra être prévu d'ajouter en outre au mélange un produit fortement aromatisé tel que citron ou orange pour homogénéiser le goût et l'arôme, afin que l'un quelconque des composants de la boisson ne ressorte particulièrement: Goût et arôme, tout doit être confondu en un seul.

La nature étant d'une extrême inconstance, la maturité des plantes à employer pouvant varier, peut-être sera-t-on amené à varier le dosage des plantes. Certaines pourront disparaître de cette liste, momentanément au profit de l'augmentation du pourcentage de l'une ou l'autre plante de cette composition, ayant à peu près les mêmes qualités et propriétés. Certaines fois ce sera le dosage de ces plantes qui variera, c'est pourquoi nous avons été obligés d'envisager une fourchette de dosage, pour chaque produit.

Mais l'invention concerne essentiellement la préparation d'un soda à partir d'un mélange d'extraits de café, de vanille, de kola, de muscade, de gentiane, de cannelle, de citron et d'extraits de fruits.

- 3 -

0136192

REVENDICATIONS

1) Boisson non alcoolisée du type "Soda" constituée d'extraits de plantes, additionnée de sucre, d'acide citrique et d'eau gazéifiée.

Boisson caractérisée en ce que les extraits de plantes sont réunis dans un mélange de plantes amères et de plantes sucrées dont la composition pour un litre de soda est la suivante :

Café de six à neuf grammes,

Vanille de trois à cinq grammes,

Kola de un à deux grammes,

Muscade de deux à trois grammes,

Gentiane de un gramme cinq à deux grammes cinq,

Cannelle de trois à cinq grammes,

Citron de deux à cinq grammes,

Extraits de fruits de deux à trois grammes.

2) Boisson selon revendication 1) caractérisée en ce que ces plantes constitueront un concentré qui sera ajouté à une solution sucrée faite de 30 à 45 grammes de cassonnade ou de sucre blanc pour un litre de soda.

3) Boisson selon revendication 1 caractérisée en ce que les extraits de fruits sont constitués d'extraits d'orange.

4) Boisson selon revendication 1 caractérisée en ce que les extraits de fruits sont constitués d'un mélange de fruits à base d'abricots, fraises, framboises, mûres et groseilles.

5) Boisson selon l'une quelconque des revendications précédentes caractérisée en ce que le mélange d'extraits de plantes comporte, en outre, du Chasmanthère à raison de un à deux grammes.

6) Boisson selon l'une des quelconques revendications précédentes caractérisée en ce que le mélange d'extraits de plantes comporte en outre de l'Eleutherokokk à raison de un à deux grammes.

7) Boisson selon l'une des quelconques revendications précédentes caractérisée en ce que le mélange d'extraits de plantes comporte, en outre, du Gienseng à raison de un à deux grammes.

8) Procédé de préparation d'une boisson selon l'une quelconque des revendications précédentes, caractérisée en ce que les extraits sont mélangés en alternant les extraits de plantes sucrées et les extraits de plantes amères.

9) Procédé selon revendication 8, caractérisé en ce que le café est mélangé préalablement à la cassonnade ou au mélange sucré et en ce que le concentré d'extraits de plantes est ajouté au mélange cassonnade-café.

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 525 626 (R.L. SWAINE et al.)<br>* revendication 1; colonne 2, lignes 67-70 * | 1 | A 23 L 2/38<br>A 23 F 5/24 |
| | --- | | |
| A | DE-A-3 010 240 (J. ENDER)<br>* revendication 1 * | 1 | |
| | --- | | |
| A | DE-A-2 405 659 (E. KOLB)<br>* revendication 1 * | 1 | |
| | --- | | |
| A | FR-A- 594 026 (A. CHALAS et al.)<br>* résumé * | | |
| | ----- | | |

DOMAINES TECHNIQUES
RECHERCHES (Int. Cl.4)

A 23 L
A 23 F

Le présent rapport de recherche a été établi pour toutes les revendications

| Lieu de la recherche<br>LA HAYE | Date d'achèvement de la recherche<br>01-10-1984 | Examinateur<br>VAN MOER A.M.J. |
|---|---|---|